# EUROPEAN PATENT APPLICATION

(11) **EP 4 550 069 A1**
(43) Date of publication of application: **07.05.2025**
(21) Application number: 24210339.8
(22) Date of filing: 01.11.2024
(51) Int. Cl.: G05B 19/418

(54) **METHOD AND DEVICE FOR PREDICTING YIELD OF IN-FAB WAFER**

(30) Priority: 03.11.2023 KR 20230151203
(71) Applicant: Samsung Electronics Co., Ltd., Suwon-si, Gyeonggi-do 16677 (KR)
(72) Inventor: LEE, Jaewon, 16677 Suwon-si (KR); KWON, Namyeong, 16677 Suwon-si (KR)
(74) Representative: Arnold & Siedsma

(57) **Abstract**

A method and a device for predicting a yield of an in-fab wafer including: generating at least one virtual process path on a residual process of the in-fab wafer; and predicting the yield of a virtual fab-out wafer that corresponds to the at least one virtual process path by using a trained yield predicting model are provided.

## Description

### background

### 1. Field

The present disclosure relates to a method and device with in-fab wafer yield prediction.

### 2. Description of Related Art

In a wafer manufacturing processes, yield-related factors such as yield deterioration factors and yield improvement factors of in-fab wafers (in-fabrication, i.e., during fabrication) may be quantified based on the yields of fab-out wafers (wafers that have been fabricated). Previously, the yield of the in-fab wafers has been predicted by adding or subtracting quantified yield-related factors to/from existing yield information. The yield prediction of the in-fab wafers is performed in LOT units (e.g., several dozen wafers per LOT), making it impossible to predict the yield of the wafer unit, and the processed data and the measured data of each wafer may not be considered in the yield prediction, so the accuracy of the yield prediction is low.

### summary

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a method for predicting a yield of an in-fabrication wafer includes: generating a virtual process path comprised of data corresponding to a residual process of the in-fabrication wafer, wherein the residual process is an uncompleted portion of a process of fabricating the in-fabrication wafer; and predicting the yield of the in-fabrication wafer by using a yield predicting model, the yield predicting model predicting the yield based on the virtual process path.

The yield predicting model may be trained with supervised learning using wafer data of fabrication-out wafers as training data and using yield information of the fabrication-out wafers as ground truth data.

Training of the yield predicting model may include inputting the wafer data encoded as numbers to the yield predicting model.

The training of the yield predicting model may include updating the yield predicting model based on a result of comparing the yield information with a yield prediction value output by the yield predicting model.

The generating of the virtual process path of the in-fabrication wafer may include sampling wafer data of a fabrication-out wafer, the fabrication-out wafer being a wafer for which fabrication has been completed; and generating the virtual process path based on the sampled wafer data.

The wafer data of the fabrication-out wafer may sampled based on its wafer data having a yield satisfying a yield condition or based on recency of the wafer data.

The virtual process path may be generated by using a path generating model.

The path generating model may be trained to generate virtual process paths with wafer data of actual process paths of fabricating fabrication-out wafers, and the fabrication-out wafers may include wafers for which fabrication has been completed.

Training of the path generating model may include inputting, to the path generating model, an embedding generated by converting the wafer data of the fabrication-out wafers into natural language sentences and position information generated by performing positional encoding on the natural language sentences.

The training of the path generating model may further include performing self-attention, layer normalization, and feed forward operations on the input embedding for multiple times by using the position information.

The predicting of the yield of the in-fabrication wafer may include generating multiple virtual process paths, including the virtual process path, for the in-fabrication wafer, using the yield predicting model to predict yields of the virtual process paths, respectively, the virtual process paths including the virtual process path, and determining a final yield of the in-fabrication wafer based on the yields.

The predicting of the yield of the in-fabrication wafer using the yield predicting model may include: generating an encoding of wafer data of the virtual process path; and inputting the encoding of the wafer data of the virtual process path to the trained yield predicting model.

In another general aspect, a device for predicting a yield of an in-fabrication wafer includes: one or more processors and a memory, wherein the memory stores instructions configured to cause the one or more processors to perform a process including: generating a virtual process path comprised of data on a residual process of the in-fabrication wafer, wherein the residual process is an uncompleted portion of a process of fabricating the in-fabrication wafer; and predicting the yield of the in-fabrication wafer by using a yield predicting model, the yield predicting model predicting the yield based on the virtual process path.

The path generating model may be trained to generate virtual process paths by using wafer data of fabrication-out wafers, the wafer data including information about equipment used to fabrication the fabrication-out wafers and measurements taken for the fabrication of the fabrication-out wafers, the wafer data including data corresponding to the residual process of the in-fabrication wafer.

The predicting of the yield of a virtual fab-out wafer by using the trained yield predicting model may include: encoding wafer data of the virtual process path; and inputting the encoded wafer data to the trained yield predicting model.

The yield predicting model may be trained with supervised learning based on wafer data of fabrication-out wafers and yield information of the fabrication-out wafers.

In another general aspect, a method for manufacturing a wafer includes: collecting wafer data of a fabrication-out wafer from processing equipment and measuring equipment disposed on a process sequence and predicting a yield of an in-fabrication wafer in a process progress based on the collected wafer data of the fabrication-out wafer; and receiving virtual process paths of a residual process of the in-fabrication wafer and predicted yields of the respective virtual process paths and optimizing a process scheduling for performing the residual process of the in-fabrication wafer based on the virtual process paths and the predicted yields.

In another general aspect, a non-volatile computer-readable medium stores information configured to cause one or more processors to perform a process for determining a yield associated with an in-fabrication wafer, the in-fabrication wafer fabricated with fabrication steps of a fabrication process, the process including: receiving first fabrication data of the in-fabrication wafer, the first fabrication data including information about first steps of the fabrication process that have been completed for the in-fabrication wafer, wherein second steps of the fabrication process have not been completed for the in-fabrication wafer; determining second fabrication data of the in-fabrication wafer, the second fabrication data including information about the second steps of the fabrication process that have been not completed for the in-fabrication wafer; and predicting the yield of the in-fabrication wafer based on the first fabrication data and the second fabrication data.

The second fabrication data may be generated by a first neural network trained with wafer data of fabrication-out wafers, the wafer data including information about completion of the first and second steps of the fabrication process to produce the fabrication-out wafers.

The information about the completion of the second steps of the fabrication process may be included in wafer data of a fabrication-out wafer, and the wafer data may include information about completion of the first and second steps of the fabrication process to produce the fabrication-out wafers.

The process may further include: training a first neural network with wafer data of the fabrication-out wafer, the wafer data including the second fabrication data and third fabrication data, the third fabrication data including information about completion of the first fabrication steps for fabricating the fabrication-out wafer; predicting, by the trained first neural network, the second fabrication data; training a second neural network with the wafer data using a yield of the fabrication-out wafer; and predicting the yield of the in-fabrication wafer by an inference of the second neural network based on the first fabrication data.

The process may further include: based on the predicted yield, completing processing of the in-fabrication wafer with a physical production process that is selected or configured according to the information about the second steps of the fabrication process.

Other features and aspects will be apparent from the following detailed description, the drawings, and the claims.

### brief description of the drawings

FIG. 1 illustrates a device for predicting yields of a wafer according to one or more embodiments.
FIG. 2 illustrates wafer data of wafers according to one or more embodiments.
FIG. 3 illustrates a method for predicting yields of a wafer according to one or more embodiments.
FIG. 4 illustrates structure of a yield-predicting model according to one or more embodiments.
FIG. 5 illustrates a method for training a yield predicting model according to one or more embodiments.
FIG. 6 illustrates a method for generating a virtual process path according to one or more embodiments.
FIG. 7 illustrates a wafer processing sequence according to one or more embodiments.
FIG. 8 illustrates virtual process paths added to progressed processes of in-fab wafers according to one or more embodiments.
FIG. 9 illustrates a method for generating a virtual process path according to one or more embodiments.
FIG. 10 illustrates a path generating model according to one or more embodiments.
FIG. 11 illustrates a method for training a path generating model according to one or more embodiments.
FIG. 12 illustrates a method for inferring a path by a path generating model according to one or more embodiments.
FIG. 13 illustrates a wafer manufacturing system according to one or more embodiments.
FIG. 14 illustrates a yield predicting device according to one or more embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

### detailed description

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

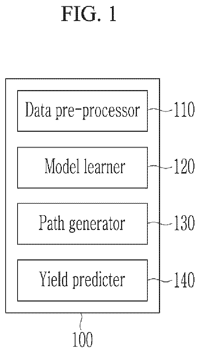

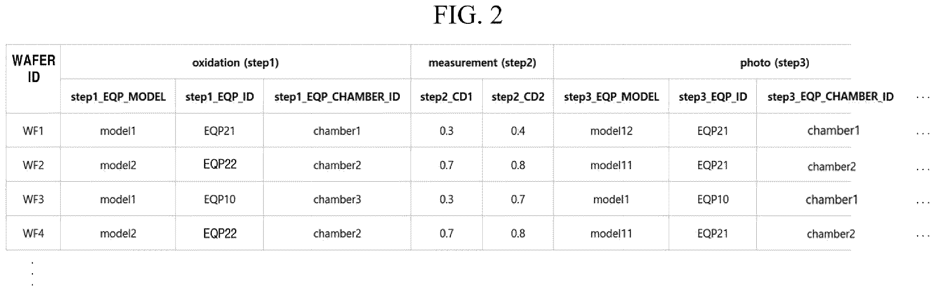

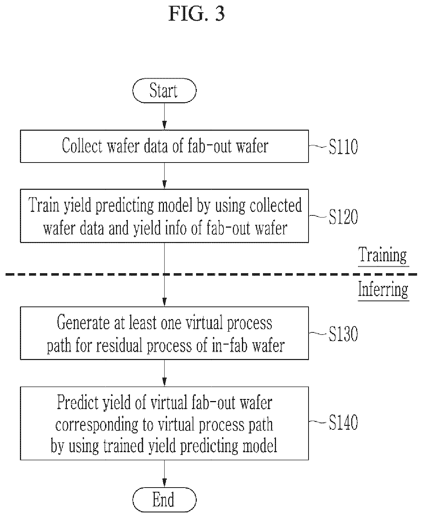

FIG. 1 illustrates a device for predicting a yield of a wafer according to one or more embodiments, FIG. 2 illustrates wafer data of wafers according to one or more embodiments, and FIG. 3 illustrates a method for predicting yields of a wafer according to one or more embodiments.

In some embodiments, a yield predicting device 100 may train a yield predicting model by using wafer data of fab-out wafers ("fabrication-out" wafers, i.e., wafers for which a fabrication process has been completed) and may predict the yield of an in-fab wafer (a "fabrication-in" wafer, i.e., a wafer still undergoing the fabrication process) by using the trained yield predicting model. The yield of the wafer may be a ratio of normal chips among chips designed on the wafer, for example, and is generally a direct indication of fabrication efficiency. For example, when it is estimated that one hundred chips are designed to be disposed on the wafer and ninety-five normal chips are included in the fab-out wafer (after fabrication is completed), the yield may be 95%.

Referring to FIG. 1, the yield predicting device 100 may include a data pre-processor 110, a model learner 120, a path generator 130, and a yield predicter 140.

In some embodiments, the data pre-processor 110 may collect wafer data of the fab-out wafers and may pre-process the collected wafer data. The collected wafer data may include process paths (records) of the respective fab-out wafers (each process path/record having information about the production/fabrication of a respective fab-out wafer); see the rows in the example data shown in FIG. 2.

The pre-processing of the data pre-processor 110 may include, for example, encoding the pieces of wafer data of the fab-out wafers into respective numbers and transmitting the number encodings to the model learner 120. The number encodings of the wafer data may be used in training of the yield predicting model. Although number encodings are mentioned, this is a non-limiting example and any type of encoding, if any, may be used. For example, pieces of wafer data may be encoded as character strings, and in some implementations multiple pieces of wafer data of a wafer may be encoded into one encoding. As used herein, "wafer data" can refer to collected information as well as the collected information in a pre-processed form.

Alternatively, the pre-processing of the data pre-processor 110 may include converting/translating the wafer data of the fab-out wafers into natural language sentences, forming the converted natural language sentences into tokens, and generating an input embedding from the tokens of the natural language sentences. The data pre-processor 110 may perform a positional encoding on the tokens of the natural language sentences that correspond to the wafer data to generate position information. The input embedding and the position information of the wafer data may be used in training a path generating model which, when trained, can predict a virtual process path of a corresponding in-fab wafer (a virtual process path being the predicted/inferred analogue of a process path/record of actual fabrication of a wafer). Any method of reducing wafer data to a form suitable for input to a neural network model may be used. The pre-processed wafer data may consist of pre-processed process paths of respectively corresponding fab-out wafers.

Generally, a fab-out wafer is a wafer whose actual yield is determined after its process/fabrication is completed, and an in-fab wafer is a wafer still in the process of being fabricated. The actual yield of a fab-out wafer may be determined, for example, in an electrical die sorting (EDS) process, which may identify and separate out abnormal chips (possibly with repairs made to some chips). Yield information of an individual fab-out wafer may include an identifier of that fab-out wafer and a yield of that fab-out wafer, thus allowing the yields of fab-out wafers to be associated with their respectively corresponding process paths/records (see FIG. 2).

In some embodiments, the model learner 120 may train the yield predicting model by using the pre-processed wafer data input from the data pre-processor 110, with the yields serving as ground truth data; the pre-processed process paths having respectively corresponding actual yields of the fab-out wafers. The trained yield predicting model may then be used in predicting the yield of an in-fab wafer based on, for example, a combining of the partial process path of the in-fab wafer combined with a virtual process path predicted from the partial process path, with the virtual process path corresponding to the portion of processing/fabrication of the in-fab wafer that has not yet been performed. For example, the model learner 120 may be/include a deep neural network (DNN) as an infrastructure of the yield predicting model. The yield predicting model is described further below.

The model learner 120 may train the path generating model for generating virtual process paths of in-fab wafers. A virtual process path may be thought of as a predicted or hypothetical partial process path, e.g., a predicted result of completion of fabrication of the corresponding in-fab wafer or substitute data obtained from wafer data of a fab-out wafer. Specifically, the data pre-processor 110 may convert the wafer data into the input embedding and may perform positional encoding on tokens of the natural language sentence that corresponds to the wafer data, which may then be used to train the path generating model by inputting the input embedding and the position information to the model learner 120. For example, the model learner 120 may further include a transformer network as an infrastructure of the path generating model.

The path generator 130 may generate a virtual process path of an in-fab wafer and may generate wafer data (e.g., features) of the virtual process path. This may involve, for example, using the path generation model as a de facto simulation of the residual (uncompleted) processing/fabrication of the in-fab wafer, or obtaining data (corresponding to the residual) of a fab-out wafer. The path generator 130 may generate at least one virtual process path for an in-fab wafer based on the wafer data of the sampled fab-out wafers (e.g., vis a vis the prior training of the path generation model with the wafer data or by directly using fab-out wafer data). For a predicted virtual path, as noted, the path generator 130 may generate the virtual process path for an in-fab wafer by using the trained path generating model. The at least one virtual process path generated for the in-fab wafer may correspond to a virtual fab-out wafer ("virtual" in the sense that it includes a virtual process path). Put another way, in one approach, data (process paths) of fab-out wafers may be used to train the path generating model, data (partial process path) of an in-fab wafer may be obtained, that data may be provided to the trained path generating model which infers therefrom yield-related features of the in-fab wafer in remaining/residual fabrication steps of the in-fab wafer (the virtual process path of the in-fab wafer), and a yield of the in-fab wafer may be predicted/inferred based in part on the virtual process path of the in-fab wafer (or more specifically, based on the virtual fab-out wafer that includes the partial process path and the partial virtual path of the in-fab wafer). Predicting/inferring yield of the virtual fab-out wafer may be performed by the trained yield predicting model, as discussed next. In another approach, data of a fab-out wafer may be directly substituted in as a virtual process path, as described below.

The yield predicter 140 may predict a yield of the virtual fab-out wafer by inputting the wafer data of the virtual fab-out wafer to the trained yield predicting model.

In some embodiments, the path generator 130 may generate multiple virtual process paths (and virtual fab-out wafers) for each in-fab wafer. Neural network models are often configured to infer multiple outputs for a given input, the outputs having varying probabilities. In this vein, the path generator model may predict multiple virtual process paths for a given in-fab wafer, each having a different probability. For each in-fab wafer, the path generator 130 may obtain y virtual process paths predicted by the path generator model (e.g., by random selection, highest probably, etc.). For the given in-fab wafer, the y virtual process paths may be combined with the given in-fab wafer's partial process path to form y virtual fab-out wafers. Assuming there are x in-fab wafers, the yield predicter 140 may input the wafer data of x×y virtual fab-out wafers to the trained yield predicting model to predict the yields of the virtual fab-out wafers (which can be used to predict yields of the in-fab wafers). Alternatively, with a substitution technique, multiple virtual process paths of an in-fab wafer may be obtained directly from wafer data of respective fab-out wafers.

When y yields are predicted for a given in-fab wafer, potential problems of a future process path of the given in-fab wafer may be analyzed from a distribution of the y yields. The predicted yields of the in-fab wafer may be used in in various ways to improve the fabricating of the in-fab wafer, for example, by adjusting process/fabrication scheduling of the in-fab wafer. For example, the in-fab wafer may finish being fabricated by processing it according to the predicted virtual process path with the highest predicted yield. The virtual process path with the highest predicted yield may be considered to be the optimal way to finish fabricating the in-fab wafer, and the yield of the optimal virtual process path may be the final predicted yield of the in-fab wafer.

Referring to FIG. 2, manufacturing steps, model names of equipment used in the manufacturing steps, identifiers of the equipment, and chamber identifiers in the equipment are shown as non-limiting examples of wafer data. As can be seen, the wafer data may include fabrication steps and respective features thereof (e.g., equipment used), and may also include measurements of measurement steps (e.g., wafer measurements, equipment measurements, etc.) performed after one or more of the fabrication steps. The measurements, sometimes referred to as critical dimensions (CD) of the measuring process, may be performed after a specific step ends. In sum, the wafer data may be any set of data captured in association with the production of wafer(s), and generally may be structured to reflect the chronology of fabrication and measurement of the wafer(s). Each wafer may have a timeline of fabrication data similar to a row shown in FIG. 2, i.e., a process path. In the case of an in-fab wafer, its wafer data (partial process path) may include only data up to some point of incomplete manufacture thereof, and in the case of a fab-out wafer, its wafer data (process path) may include data through completion of the fabrication thereof.

The semiconductor manufacturing process of a wafer may include multiple process steps ("steps") including an oxidation step, a photo step, an etching step, a deposition and ion implantation step, and a metal interconnecting step on the wafer, as non-limiting examples. The number of steps to fabricate a wafer may be several hundreds to several thousands, depending on the type of the semiconductor. One wafer passing through the manufacturing steps may be managed with a wafer identifier, and its wafer data (category data and measured data of the process) may be generated/collected and associated with the wafer identifier as the wafer passes through the respective manufacturing steps. Therefore, the number of features of a wafer's wafer data may be several thousands to several tens of thousands.

While the order of steps such as oxidation, measurement, or photo may be the same for each wafer produced by a same fabrication process, aspects/parameters of the steps may vary from wafer to wafer. For example, a same step may be performed by different processing equipment and/or measuring equipment for different wafers. As shown in the example data of FIG. 2, step1 of fabricating the wafer WF1 was performed in a chamber1 of the equipment of model1 that has an identifier EQP21. Step1 of fabricating the wafer WF2 was performed in a chamber2 of the equipment of model2 that has an identifier EQP22. For example, the wafer data of the wafer WF1 may include category data of steps such as model1, EQP21, chamber1, model12, EQP21, and chamber1 and measured data such as 0.3 and 0.4.

The wafer data may include category data and measured data of respective steps of a specific wafer. The category data of the steps may include information (equipment model name (EQP_MODEL) of the processing equipment used in corresponding steps, an equipment identifier (EQP_ID), and chamber identifiers (EQP_CHAMBER_ID) PPID, RETICLE, etc.,) in the equipment. The category data may further include, for example, a time when a specific wafer enters the processing equipment, a time when the specific wafer leaves the processing equipment, and information on anomalies generated in the process. The measured data may include measured result on the measurement performed on the wafer.

Referring to FIG. 3, the data pre-processor 110 of the yield predicting device 100 may collect the wafer data of the fab-out wafers from the processing equipment and the measuring equipment (S110). The model learner 120 of the yield predicting device 100 may train the yield predicting model through a supervised learning by using the wafer data of the fab-out wafers and yield information of the fab-out wafers (S120). The yields of the fab-out wafers may function as ground truth data, and the trained yield predicting model may output a predicted yield for a given input of a process path (e.g., a process path of a virtual fab-out wafer, i.e., a concatenation of a partial process path of an in-fab wafer and a virtual process path inferred from the same).

Incidentally, wafer data (e.g., a partial process path) of in-fab wafers may be collected in the same manner as wafer data of fab-out wafers, albeit incompletely

In some embodiments, the data pre-processor 110 of the yield predicting device 100 may pre-process the collected wafer data and may provide the pre-processed wafer data to the model learner 120. For example, the data pre-processor 110 may pre-process the wafer data by encoding the wafer data of the fab-out wafer into numbers, feature vectors, or the like.

Referring to FIG. 2, the model name of the processing equipment, the equipment identifier of the processing equipment, and the chamber identifier in the processing equipment used in the oxidation step, the measuring step, and the photo step may be encoded into respective numbers by the data pre-processor 110. Each unique combination of model name, equipment identifier, and step may have a unique number encoding. When the model names and the identifiers of the equipment used in the same step are the same, the model names and the identifiers of the corresponding equipment may be encoded into the same number. However, when two different steps have the same model and equipment identifier, they will have different numbers. Similarly, when the same step has a same equipment identifier but for different models, they will have different numbers. For example, referring to FIG. 2, the identifier of the processing equipment used in the oxidation process of WF1 and the identifier of the processing equipment used in the photo process of WF1 are both EQP21, but because the processing equipment are used in different steps so EQP21 of the oxidation process and EQP21 of the photo process may be encoded into different numbers.

In some embodiments, the model learner 120 of the yield predicting device 100 may train the yield predicting model through a supervised learning by using yield information inferred from the pre-processed wafer data and yield information of the fab-out wafers. The model learner 120 may input pre-processed wafer data of a specific fab-out wafer to the yield predicting model, and the yield predicting model may output a yield prediction value that corresponds to the specific fab-out wafer. The model learner 120 may compare the yield prediction value output from the yield predicting model and the actual yield value (information) of the fab-out wafer to calculate a loss function or an objective function, and may update the yield predicting model based on the calculation result of the loss or objective function. This training process may be performed for each of the fab-out wafers in a set of wafer data being used as training data.

With the trained yield predicting model, the yield predicting device 100 may generate a virtual process path of an in-fab wafer, and may predict the yield of the in-fab wafer's virtual fab-out wafer (which includes the virtual process path) by using the trained yield predicting model on the virtual fab-out wafer.

Referring to FIG. 3, the path generator 130 of the yield predicting device 100 may generate at least one virtual process path corresponding to a residual (uncompleted) part of the fabrication process of the in-fab wafer (S130). The path generator 130 may obtain the wafer data of the virtual fab-out wafer that includes the virtual process path through the path generating model (which in effect simulates processing of the residual part of the in-fab wafer's fabrication process).

In some embodiments, the path generator 130 may generate at least one virtual process path based on the wafer data of the fab-out wafers sampled from the fab-out wafers. In one approach, the path generator 130 may construct the virtual process path directly from the wafer data of the fab-out wafers. Alternatively, the path generator 130 may generate at least one virtual process path by using the path generating model trained based on the wafer data of the fab-out wafers.

The yield predicter 140 of the yield predicting device 100 may predict the yield of the virtual fab-out wafer that includes (or corresponds to) the virtual process path of the in-fab wafer by using the trained yield predicting model (S140). For this purpose, the yield predicter 140 of the yield predicting device 100 may input the wafer data (e.g., the combined process path of the in-fab wafer and the virtual process path of its residual) of the virtual fab-out wafer to the trained yield predicting model to predict the yield of the virtual fab-out wafer.

As described above, the yield predicting device may effectively simulate various process paths for one in-fab wafer by using the yield predicting model (which has been trained based on the wafer data of the fab-out wafers), and may obtain the predicted yields for the respective the virtual process paths. The actual/physical process path most likely to have a high yield may be optimized through various predicted yield distributions of the in-fab wafer. For example, the virtual path with the highest yield may be used to optimize fabrication of the in-fab wafer (i.e., fabrication may be performed according to the virtual process path). Further, the virtual process path predicted to have a low yield may be analyzed to identify fabrication problems, and the process for manufacturing a wafer may be improved.

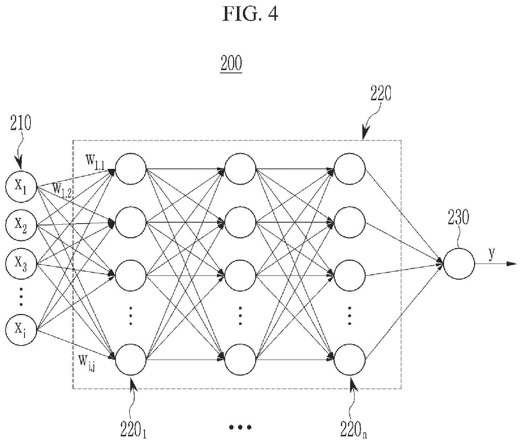

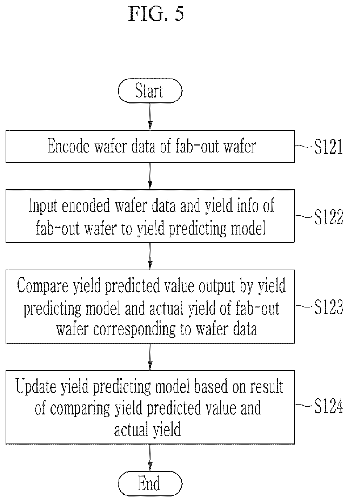

FIG. 4 illustrates a yield predicting model according to one or more embodiments, and FIG. 5 illustrates a method for training a yield predicting model according to one or more embodiments.

Referring to FIG. 4, the yield predicting model may be a deep neural network including an input layer 210, a hidden layer portion 220, and an output layer 230.

In some embodiments, the wafer data of a fab-out wafer may be encoded into i numbers and may be input to i respective input nodes (x₁ to xᵢ) of the input layer 210 of the deep neural network 200. Each piece of data of the wafer data, e.g., category data of a fabrication step or measurement data of a measuring step, may correspond to one input node. The input layer 210 may have an appropriate structure for processing a significant number of pieces of input data of an input, e.g., fabrication/measurement wafer data of a wafer.

Referring to FIG. 5, the data pre-processor 110 of the yield predicting device 100 may encode the wafer data of a fab-out wafer to improve the wafer data's ability to be used as an input of the deep neural network 200 (S121). For example, the wafer data of a fab-out wafer may be encoded as a feature vector with elements being values (e.g., numbers) representing respective data of the fabrication process of the fab-out wafer. The data pre-processor 110 may encode the categories of the wafer data of a specific fab-out wafer into respective numbers and may transmit the encoded wafer fabrication and measurement data expressed as numbers to the model learner 120 together with the yield information of the corresponding fab-out wafer (S122); the yield information (or yield value) serving as a ground truth label. In some implementations, measurements may be normalized, for example.

The wafer data may be processed by at least one hidden layer (220₁ to 220ₙ) of the hidden layer portion 220 of the deep neural network 200, and a value (e.g., yield prediction value) that is inferred from the wafer data (the value corresponding to the ground truth yield of the wafer data) may be output from the output layer 230. The outputted yield prediction value and the ground truth yield value of the corresponding fab-out wafer may be compared to each other to update the yield predicting model to move the yield prediction value (e.g., its weights, biases, etc.) closer to the ground truth yield.

Referring to FIG. 5, the model learner 120 may compare the yield prediction value output by the yield predicting model and the actual ground truth yield of the fab-out wafer that corresponds to the wafer data that are input to the yield predicting model to calculate the loss function of the yield predicting model (S123). The model learner 120 may update the yield predicting model based on the comparison result (e.g., result of calculating the loss function) between the yield prediction value output from the yield predicting model and the actual yield (S124).

For example, when the wafer data of a fab-out wafer with a 98% actual yield value (ground truth) is processed by the hidden layer portion 220 of the deep neural network 200, and the output layer 230 of the deep neural network 200 outputs a 97% yield prediction value, the model learner 120 may calculate a predetermined loss function based on the difference between the 98% of the actual yield of the corresponding fab-out wafer and 97% of the yield prediction value. The model learner 120 may update weights of the yield predicting model so that the yield predicting model will output a higher yield (one closer to the ground truth of 98%) for the same wafer data based on the calculation result of the loss function.

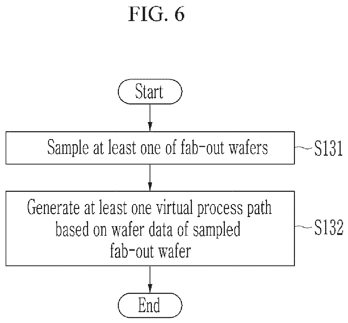

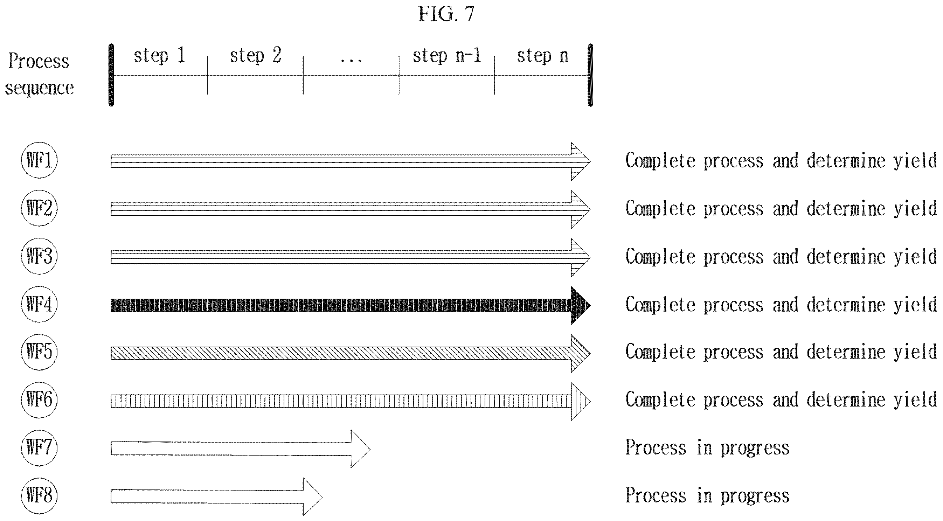

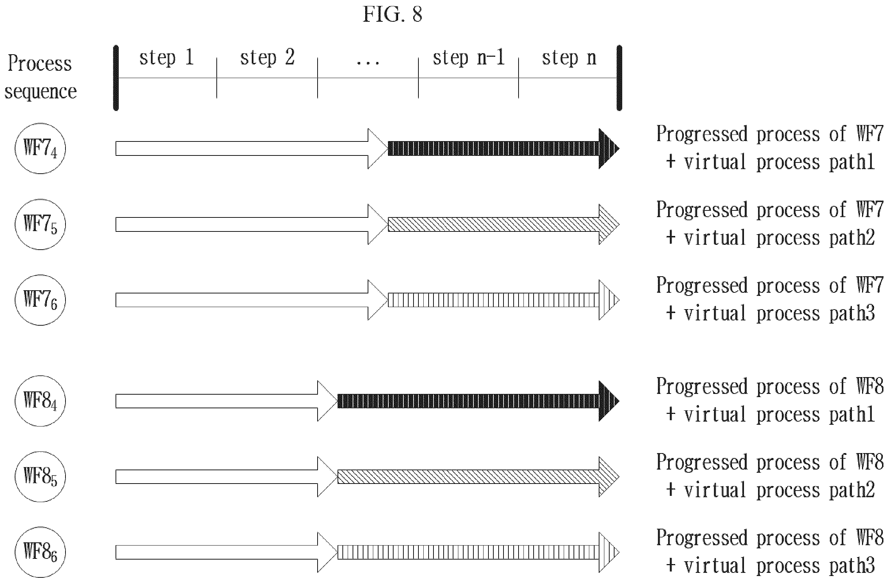

FIG. 6 illustrates a method for generating a virtual process path according to one or more embodiments, FIG. 7 illustrates a wafer processing sequence according to one or more embodiments, and FIG. 8 illustrates a virtual process path added to a progressed/partial process path of an in-fab wafer according to one or more embodiments.

In some embodiments, the yield predicting device 100 may generate, for a partial process path of an in-fab wafer, a virtual process path for a corresponding uncompleted/unstarted process path/sequence (i.e., a residual process) of the in-fab wafer. The predicting may be based on the partial process path of the in-fab wafer and previous training using the wafer data of the fab-out wafers. A virtual fab-out wafer may be formed by combining the partial process path and the virtual process path of the in-fab wafer, and the yield predicting device 100 may predict the yield of the virtual fab-out wafer (and by association, a predicted yield of the in-fab wafer) by using the combined actual and predicted wafer data (actual and predicted process path) of the virtual fab-out wafer.

Referring to FIG. 6, to obtain wafer data of fab-out wafers for training, the path generator 130 of the yield predicting device 100 may obtain a sampling of fab-out wafers (S131).

In some embodiments, the path generator 130 may select samples of relatively recently fabricated fab-out wafers to reflect information on the newly added equipment or repaired equipment used in the corresponding fabrication process. When the fabbed-out wafers are sampled for a predetermined time period that is relatively recent, wafers having passed through processes performed by various types of new/improved equipment and/or processing may be sampled.

The path generator 130 may randomly sample fab-out wafers that were fabbed out after the predetermined time (e.g., during the previous ten days). When the fab-out wafers are randomly sampled, diversity of the sampled process paths of the fab-out wafers may be increased. In another way, the path generator 130 may sample fab-out wafers having a yield greater than a threshold value. For example, the yield of the top 25% (Q3) of the fab-out wafers from among the entire fab-out wafers may be predetermined to be a yield size for sampling the wafers.

Alternatively, the path generator 130 may sample fab-out wafers that have process paths the same as (or similar to) the partially progressed process path of the in-fab wafer for which a virtual process path is to be generated.

In some embodiments, when the process sequence of fabricating the wafers includes n-numbered steps to completion, and the fab-out wafers may be those for which the n process steps are completed. Referring to FIG. 7, WF1, WF2, WF3, WF4, WF5, and WF6 are fab-out wafers. The respective fab-out wafers may undergo the same process steps, but may have variations of the parameters of the process steps, for example, they may have different model names, identifiers, and/or chamber identifiers of the equipment for performing the respective process steps for one wafer. That is, the process steps for respective wafers may, for example, be performed by different equipment, as reflected by the different arrow patterns indicating process progressions of WF1 to WF6 in FIG. 7. In the following example used for explanation, it will be assumed that the path generator 130 samples WF4, WF5, and WF6 from among the fab-out wafers.

Referring to FIG. 6, given the in-fab wafer for which yield information is to be predicted, the path generator 130 of the yield predicting device 100 may generate one or more virtual process paths for the residual process of the in-fab wafer based on the wafer data of respective sampled fab-out wafers (S132). In this approach, one or more full process paths (or virtual fab-out wafers) of the in-fab wafer are formed by combining the partial process path of the in-fab wafer (e.g., step1 to step(n-m)) with partial/virtual process paths of the fab-out wafers corresponding to the residual path of the in-fab wafer (e.g., step(n-m+1) to step n); the fab-out wafers may have been sampled with any of the techniques described earlier.

Referring to FIG. 7 and FIG. 8, WF7 and WF8 are in-fab wafers that have reached different partial process/fabrication states (the process progression of WF7 is further than the process progression of WF8). Referring to FIG. 8, the path generator 130 may generate virtual partial process paths for the respective residual processes of the in-fab wafers WF7 and WF8 based on the wafer data of the sampled fab-out wafers WF4, WF5, and WF6. For example, for in-fab wafer WF7, three hybrid (real-virtual) complete paths, WF7₄, WF7₅, and WF7₆, may be generated by combining the partial process path of WF7 (from completed fabrication of WF7)with partial process paths of wafers WF4, WF5, and WF6 (these partial process paths are parts of the respective fab-out wafers' process paths that correspond to the residual (uncompleted) process path of the in-fab wafer WF7). Similarly, for in-fab wafer WF8, three hybrid (real-virtual) paths, WF8₄, WF8₅, and WF8₆, may be generated by combining the partial process path of WF8 with corresponding partial/residual process paths of wafers WF4, WF5, and WF6.

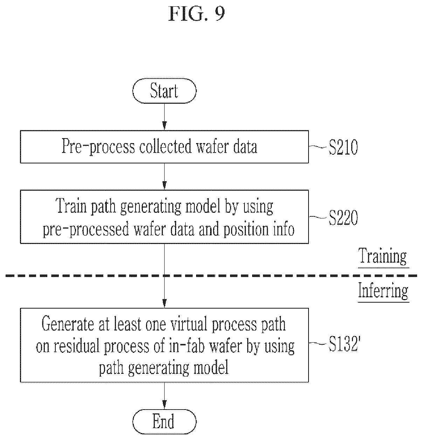

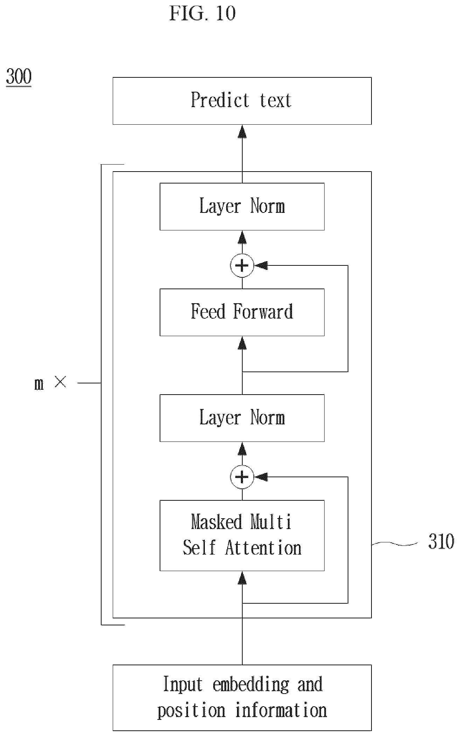

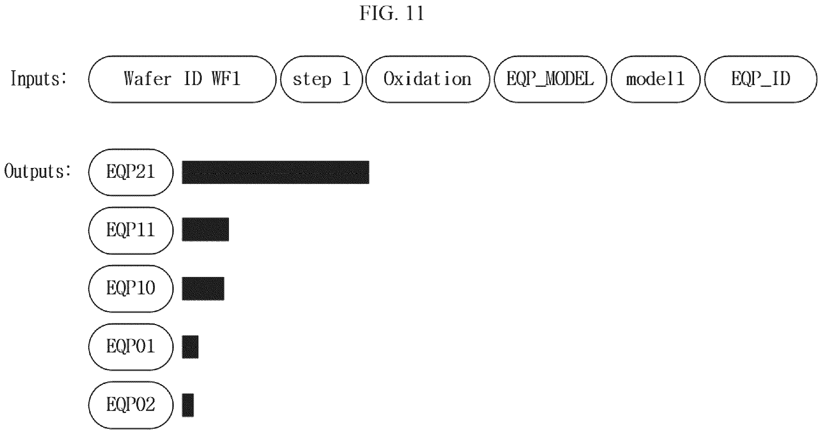

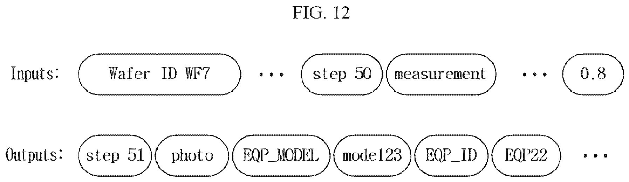

FIG. 9 illustrates another method for generating a virtual process path according to one or more embodiments, FIG. 10 illustrates an example structure of a path generating model according to one or more embodiments, FIG. 11 illustrates a method for training a path generating model according to one or more embodiments, and FIG. 12 illustrates a method for inferring a path by a path generating model according to one or more embodiments.

In some embodiments, the yield predicting device 100 may train the path generating model of the virtual process path based on wafer data of fab-out wafers and may generate the virtual process paths of a residual process of an in-fab wafer by using the trained path generating model.

Referring to FIG. 9, the data pre-processor 110 of the yield predicting device 100 may pre-process the wafer data of the fab-out wafers to generate input embedding and position information used in training the path generating model for generating virtual process paths (S210). The data pre-processor 110 may convert the wafer data of the fab-out wafers into natural language sentences, for example, and may make the natural language sentences into tokens. The making of the natural language sentences into tokens may involve dividing words or sub-words in the natural language sentences into tokens. For example, in the case of WF1 of FIG. 2, the wafer data may be converted into the natural language sentence as follows.

The natural language sentence that corresponds to the wafer data of WF1: "In the oxidation process of the wafer ID WF1, model1 is used as EQP_MODEL, EQP_ID is EQP21, EQP_CHAMBER_ID is chamber1, a measured value on CD1 is 0.3, and a measured value on CD2 is 0.4. In the photo process of the wafer ID WF1, model12 is used as EQP_MODEL, EQP_ID is EQP21, and EQP_CHAMBER_ID is chamber1..."

The data pre-processor 110 may generate the input embedding of the wafer data based on the natural language sentence made into the token.

The data pre-processor 110 may perform a positional encoding on the natural language sentence to generate position information on the respective tokens of the natural language sentence that corresponds to the wafer data. Token position information of the tokens in the sentence may be allocated to each token and the position information may indicate the position of each token to which position information is allocated in the sentence. The input embedding and the position information of the wafer data of the fab-out wafers generated by the data pre-processor 110 may be transmitted to the model learner 120.

In some embodiments, the model learner 120 may train the path generating model of the virtual process path based on the input embedding and the position information of the wafer data of the fab-out wafers (S220).

In some embodiments, the path generating model of the virtual process path may be a transformer model and the model learner 120 may train a decoder of the transformer model so that the path generating model is able to generate virtual process paths. For example, the transformer model used as the path generating model may be a generative pre-trained transformer (GPT).

Referring to FIG. 10, the path generating model 300 may include m decoders 310. Regarding the m decoders 310, an output of the i-th decoder 310 may be used as an input to the (i+1)-th decoder 310. When an operation of the decoder 310 is repeated m times, the path generating model 300 may output a final text prediction result. In some embodiments, the m decoders 310 may perform masked multi self-attention, layer normalization, and feed forward operations on the input embedding for m times by using the position information of the token in the natural language sentence.

Still referring to FIG. 10, the decoders 310 of the path generating model 300 may perform self-attention when the input embedding and position information of the wafer data are input. When performing a masked multi self-attention, a decoder may mask a rear portion of the input sentence, train attention among the texts of portions that are not masked, and predict a text that is next to the texts that are not masked. The sentence or the text may be masked by setting a probability of the portion being masked to 0.

The decoder 310 may add (residually connect) a result of the masked multi self-attention, the input embedding, and position information of the sentence that is made into the tokens to perform layer normalization. Layer normalization may be performed to increase training rates and increase training stability.

The decoder 310 may feed forward based on a layer normalization result. The feed forward result may be residually connected with the feed forward input to be layer-normalized. According to the above-described process, the path generating model 300 may be trained by using the natural language sentence that corresponds to the wafer data of the fab-out wafers. During this process, the path generating model 300 may learn an order of the process steps so that the virtual process path to be generated in an inference process may not be discrepant from the order of the process step.

In some embodiments, the model learner 120 may train the path generating model 300 by sequentially predicting texts of the natural language sentence that corresponds to the wafer data.

For example, in a specific stage of the training, the path generating model 300 may predict the next text of the portion that is not masked from among the natural language sentence that corresponds to the wafer data of WF1.

Referring to FIG. 11, when the natural language sentence input to the decoder 310 is "In the oxidation process of the wafer ID WF1, model1 is used as EQP_MODEL, and EQP_ID is", the model learner 120 may train the path generating model 300 to cause the decoder 310 to output 'EQP21'. That is, the path generating model 300 may be trained by a process of predicting the next text of 'EQP_ID' through the decoders 310, calculating a probability of the predicted text, and outputting the text having the highest probability.

Referring to FIG. 11, bars shown to the right of the outputs indicate probabilities of respective outputs determined by the model learner 120. In the middle part of the training, the path generating model 300 may output 'EQP21' on the masked sentence of the wafer data of WF1 with the highest probability.

The fab-out wafers sampled to train the path generating model 300 may or may not be the same fab-out wafers sampled to train the yield predicting model. For example, for a predetermined period of time (e.g., recent ten days), fab-out wafers having respective yields greater than a yield threshold (e.g., 99%) may be selected/sampled to train the path generating model 300. The natural language sentence that corresponds to the wafer data of the fab-out wafers may be used as a correct answer to an intermediate prediction result on training the path generating model 300 so the fab-out wafer may have a yield as a relatively high as that of a manufactured one.

The path generator 130 may use the trained path generating model 300 to generate a partial virtual process path for the corresponding residual process of an in-fab wafer (S132). For example, when the first unperformed step of WF7 of FIG. 7 is a measurement step (e.g., step number 51), the path generator 130 may generate, as a partial virtual process path, model names, identifiers, chamber identifiers, etc., of the equipment and/or the measuring equipment to be used for each of the 51st to the n-th steps (that is, final step) of WF7 by using the trained path generating model 300. Alternatively, when the first uncompleted step of WF8 of FIG. 7 is an ion implantation process (e.g., step 36), the path generator 130 may generate model names, identifiers, chamber identifiers, etc., of the equipment and/or the measuring equipment to be used for each of the 36th to the n-th steps of WF8 as virtual process path by using the trained path generating model 300. More than one partial virtual process path may be generated for each in-fab wafer in this way (e.g., top-N partial virtual paths may be predicted for each in-fab wafer).

Referring to FIG. 12, the path generator 130 may input the input embedding and the position information of the token of the natural language sentence "0.7 and 0.8 are measured as a measurement result of step 50 ... of the wafer ID WF7" to the trained path generating model 300 and may receive "model23 is used as EQP_MODEL in the photo process of the step and EQP_ID is ..." from the path generating model 300. What is output as a result of inference by the path generating model 300 may be the virtual process path of from the 51st step to the n-th step (that is, final step).

In some embodiments, the path generator 130 may convert a partial virtual process path expressed in a natural language sentence into wafer data. The data pre-processor 100 may encode the wafer data of the virtual process path into numbers (e.g., a vector numbers, a set of number strings, etc.) to be input to the yield predicting model or may encode the virtual process path into the numbers.

The yield predicter 140 of the yield predicting device 100 may predict the yield(s) of respective virtual process path(s) of an in-fab wafer or the yield of the virtual fab-out wafer that corresponds to the virtual process path. In an embodiment, when the encoded wafer data of the virtual process path is input to the trained yield predicting model, the trained yield predicting model may perform a neural network operation on the encoded wafer data of the input virtual process path to infer the yield of the virtual process path or may predict the yield of the virtual fab-out wafer that corresponds to the virtual process path.

In some embodiments, the yield predicter 140 may predict the yields of the full virtual process paths concurrently or in parallel by using the trained yield predicting model. For example, when the in-fab wafers for which yield will be predicted are WF7 and WF8 and the path generator 130 generates three virtual process paths based on the three fab-out wafers WF4, WF5, and WF6 for the respective in-fab wafers, the yield predicter 140 may predict the yield for the 6 (=2×3) virtual process paths in a parallel way.

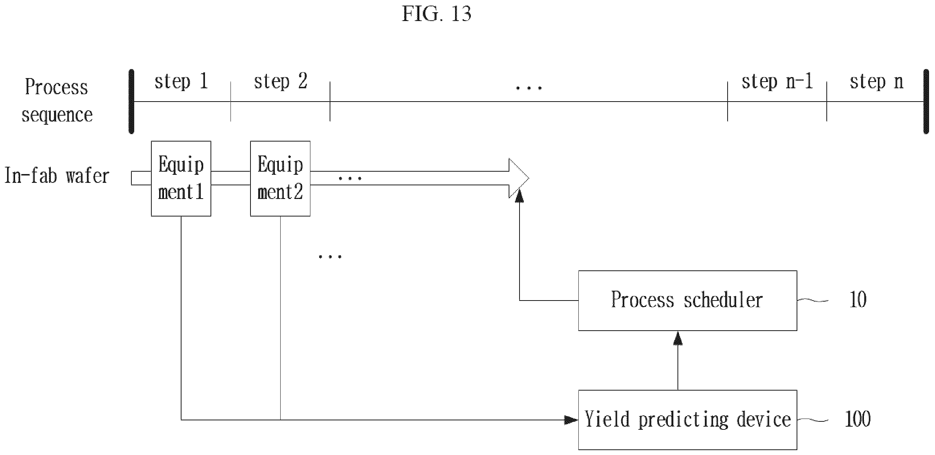

FIG. 13 illustrates a wafer manufacturing system according to one or more embodiments.

Referring to FIG. 13, the yield predicting device 100 may collect wafer data of fab-out wafers from the processing equipment, the measuring equipment, etc., of the process sequence, and may predict the yield of an in-fab wafer of the process in progress based on the wafer data of the fab-out wafer. The yield predicting device 100 may predict yields for the respective virtual process paths generated for the residual process of the in-fab wafer and may determine the predicted yields for the respective virtual fab-out wafers that correspond to the virtual process paths.

In some embodiments, the yield predicting device 100 may transmit the virtual process paths and the predicted yields of the virtual process paths to the process scheduler 10 or may recommend the virtual process path with the highest yield to the process scheduler 10. In this way, fabrication of an in-fab wafer may be optimally completed.

In some embodiments, the process scheduler 10 may optimize a process scheduling on the residual process of the corresponding in-fab wafer based on the virtual process paths and the predicted yields or based on the recommended virtual process path. Alternatively, the process scheduler 10 may analyze the virtual process path with a relatively low predicted yield and may improve the wafer manufacturing process.

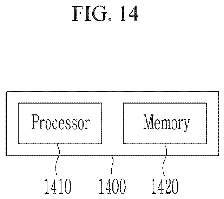

FIG. 14 illustrates a block diagram on a yield predicting device according to one or more embodiments.

The yield predicting device may be implemented with a computer system.

Referring to FIG. 14, the computer system 1400 includes one or more processors 1410 and a memory 1420. The memory 1420 may be connected to the one or more processors 1410 and may store instructions or programs configured to cause the one or more processors 1410 to perform a process including any of the methods described above.

The one or more processors 1410 may realize functions, stages, or methods proposed in the embodiment. An operation of the computer system 1400 according to an embodiment may be realized by the one or more processors 1410. The one or more processors 1410 may include a GPU and a CPU.

The memory 1420 may be provided inside/outside the processor, and may be connected to the processor through various means known to a person skilled in the art. The memory represents a volatile or non-volatile storage medium in various forms (but not a signal per se), and for example, the memory may include a read-only memory (ROM) and a random-access memory (RAM). In another way, the memory may be a PIM (processing in memory) including a logic unit for performing self-contained operations.

In another way, some functions (e.g., training the yield predicting model and/or the path generating model, inference by the yield predicting model and/or the path generating model) of the yield predicting device may be provided by a neuromorphic chip including neurons, synapses, and inter-neuron connection modules. The neuromorphic chip is a computer device simulating biological neural system structures, and may perform neural network operations.

Meanwhile, the embodiments are not only implemented through the device and/or the method described so far, but may also be implemented through a program that realizes the function corresponding to the configuration of the embodiment or a recording medium on which the program is recorded, and such implementation may be easily implemented by anyone skilled in the art to which this description belongs from the description provided above. Specifically, methods (e.g., yield predicting methods, etc.) according to the present disclosure may be implemented in the form of program instructions that can be performed through various computer means. The computer readable medium may include program instructions, data files, data structures, etc. alone or in combination. The program instructions recorded on the computer readable medium may be specifically designed and configured for the embodiments. The computer readable recording medium may include a hardware device configured to store and execute program instructions. For example, a computer-readable recording medium includes magnetic media such as hard disks, floppy disks and magnetic tapes, optical recording media such as CD-ROMs and DVDs, and optical disks such as floppy disks. It may be magneto-optical media, ROM, RAM, flash memory, or the like. A program instruction may include not only machine language codes such as generated by a compiler, but also high-level language codes that may be executed by a computer through an interpreter or the like.

The computing apparatuses, the electronic devices, the processors, the memories, the displays, the information output system and hardware, the storage devices, and other apparatuses, devices, units, modules, and components described herein with respect to FIGS. 1-14 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-14 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure may also be defined by the claims and their equivalents, and all variations within the scope of the claims and their equivalents are to be construed as being included in the disclosure.

## Claims

1. A method for predicting a yield of an in-fabrication wafer, the method comprising:
generating a virtual process path comprised of data corresponding to a residual process of the in-fabrication wafer, wherein the residual process is an uncompleted portion of a process of fabricating the in-fabrication wafer; and
predicting the yield of the in-fabrication wafer by using a yield predicting model, the yield predicting model predicting the yield based on the virtual process path.

2. The method of claim 1, wherein the yield predicting model is trained with supervised learning using wafer data of fabrication-out wafers as training data and using yield information of the fabrication-out wafers as ground truth data.

3. The method of claim 2, wherein the training of the yield predicting model comprises
inputting the wafer data encoded as numbers to the yield predicting model; and/or
updating the yield predicting model based on a result of comparing the yield information with a yield prediction value output by the yield predicting model.

4. The method of any one of the previous claims, wherein the generating of the virtual process path of the in-fabrication wafer comprises
sampling a fabrication-out wafer, the fabrication-out wafer being a wafer for which fabrication has been completed; and
generating the virtual process path based on the sampled fabrication-out wafer.

5. The method of claim 4, wherein the fabrication-out wafer is sampled based on its yield satisfying a yield condition or based on recency of the fabrication-out wafer.

6. The method of any one of the previous claims, wherein the virtual process path is generated by using a path generating model.

7. The method of claim 6, wherein
the path generating model is trained to generate virtual process paths by using wafer data of actual process paths of fabricating fabrication-out wafers, the fabrication-out wafers comprising wafers for which fabrication has been completed, the wafer data preferably comprising information about equipment used for the fabrication the fabrication-out wafers and measurements taken for the fabrication of the fabrication-out wafers, the wafer data including data corresponding to the residual process of the in-fabrication wafer.

8. The method of claim 7, wherein the training of the path generating model comprises
inputting, to the path generating model, an embedding generated by converting the wafer data of the fabrication-out wafers into natural language sentences and position information generated by performing positional encoding on the natural language sentences; and
optionally, performing self-attention, layer normalization, and feed forward operations on the input embedding for multiple times by using the position information.

9. The method of any one of the previous claims, wherein the predicting of the yield of the in-fabrication wafer comprises
generating multiple virtual process paths, including the virtual process path, for the in-fabrication wafer,
using the yield predicting model to predict yields of the virtual process paths, respectively, the virtual process paths including the virtual process path, and
determining a final yield of the in-fabrication wafer based on the yields.

10. The method of claim 1, wherein the predicting of the yield of the in-fabrication wafer using the yield predicting model comprises:
generating an encoding of wafer data of the virtual process path; and
inputting the encoding of the wafer data of the virtual process path to the trained yield predicting model.

11. A device for predicting a yield of an in-fabrication wafer, the device comprising:
one or more processors and a memory,
wherein the memory stores instructions configured to cause the one or more processors to perform a process according to the method of any of the previous claims.

12. The device of claim 11, wherein
the yield predicting model is trained with supervised learning based on wafer data of fabrication-out wafers and yield information of the fabrication-out wafers.

13. A non-volatile computer-readable medium storing information configured to cause one or more processors to perform a process for determining a yield associated with an in-fabrication wafer, the in-fabrication wafer fabricated with fabrication steps of a fabrication process, the process comprising:
receiving first fabrication data of the in-fabrication wafer, the first fabrication data comprising information about first steps of the fabrication process that have been completed for the in-fabrication wafer, wherein second steps of the fabrication process have not been completed for the in-fabrication wafer;
determining second fabrication data of the in-fabrication wafer, the second fabrication data comprising information about the second steps of the fabrication process that have been not completed for the in-fabrication wafer; and
predicting the yield of the in-fabrication wafer based on the first fabrication data and the second fabrication data.

14. The non-volatile computer-readable medium of claim 13, wherein the second fabrication data is generated by a first neural network trained with wafer data of fabrication-out wafers, the wafer data comprising information about completion of the first and second steps of the fabrication process to produce the fabrication-out wafers;
wherein, preferably, the information about the completion of the second steps of the fabrication process is comprised in wafer data of a fabrication-out wafer, the wafer data comprising information about completion of the first and second steps of the fabrication process to produce the fabrication-out wafers.

15. The non-volatile computer-readable medium of claim 13 or 14, the process further comprising:
training a first neural network with wafer data of the fabrication-out wafer, the wafer data comprising the second fabrication data and third fabrication data, the third fabrication data comprising information about completion of the first fabrication steps for fabricating the fabrication-out wafer;
predicting, by the trained first neural network, the second fabrication data;
training a second neural network with the wafer data using a yield of the fabrication-out wafer; and
predicting the yield of the in-fabrication wafer by an inference of the second neural network based on the first fabrication data.
